# EUROPÄISCHE PATENTSCHRIFT

(11) **EP 2 324 522 B1**
(45) Veröffentlichungstag und Bekanntmachung des Hinweises auf die Patenterteilung: **01.01.2020**
(21) Anmeldenummer: 09778719.6
(22) Anmeldetag: 17.09.2009
(51) Int. Cl.: H01G 2/04, H01G 4/38, H01M 2/10

(54) **ANORDNUNG UND VERFAHREN ZUM HALTEN EINER MEHRZAHL VON ELEKTRISCHEN KONDENSATORBAUGRUPPEN**
ARRANGEMENT AND METHOD FOR HOLDING A PLURALITY OF ELECTRIC CAPACITOR ASSEMBLIES
ENSEMBLE ET PROCÉDÉ POUR MAINTENIR UNE PLURALITÉ DE BLOCS CONDENSATEURS ÉLECTRIQUES

(30) Priorität: 19.09.2008 DE 102008048082
(43) Veröffentlichungstag der Anmeldung: 25.05.2011
(73) Patentinhaber: Bombardier Transportation GmbH, 10785 Berlin (DE)
(72) Erfinder: ZENGERLE, Manfred, 67280 Ebertsheim (DE); LEININGER, Tobias, 68309 Mannheim (DE)
(74) Vertreter: Patentanwälte Bressel und Partner mbB
(86) Internationale Anmeldenummer: PCT/EP2009/006929
(87) Internationale Veröffentlichungsnummer: WO 2010/031594

(56) Entgegenhaltungen:
- EP-A1- 0 700 060
- EP-A1- 1 589 547
- DE-C1- 19 723 455
- DE-U1- 20 020 121
- JP-B2- 3 412 169
- US-A- 5 278 729
- US-A1- 2008 068 801

## Beschreibung

Die Erfindung gemäß Anspruch 1 betrifft eine Anordnung zum Halten einer Mehrzahl von elektrischen Kondensatorbaugruppen, insbesondere von Baugruppen, deren Gehäuse potentialbehaftet ist. Die Erfindung betrifft ferner ein Verfahren gemäß Anspruch 8 zum Halten einer Mehrzahl der Kondensatorbaugruppen. Ein spezieller Aspekt betrifft die Speicherung elektrischer Energie in einer Batterie (das heißt einer Anordnung mit einer Mehrzahl) von Kondensatorbaugruppen.

Kondensatoren werden seit einigen Jahren für die Speicherung von elektrischer Energie, insbesondere der Bremsenergie von Schienenfahrzeugen eingesetzt. Die in den Kondensatoren gespeicherte Energie kann insbesondere für den nächstfolgenden Anfahrvorgang oder Beschleunigungsvorgang genutzt werden.

Kondensatorbaugruppen werden üblicherweise in Gehäusen hergestellt und zum Verkauf angeboten. Bei einer üblichen Bauform ist das Gehäuse zylindrisch und liegt auf einem der beiden elektrischen Potentiale des Kondensators bzw. der Mehrzahl von in dem Gehäuse angeordneten Kondensatoren. Das andere Potential liegt zum Beispiel an einem stiftförmigen Kontakt an der Stirnseite des Gehäuses an. Die Erfindung betrifft jedoch auch andere Bauformen.

Insbesondere wegen dem potentialbehafteten Gehäuse werden die Baugruppen üblicherweise mit Hilfe von Platten aus elektrisch isolierendem Material befestigt, um so mehrere Baugruppen nebeneinander anzuordnen und in der gewünschten Weise elektrisch verbinden zu können. Insbesondere können die Baugruppen elektrisch in Serie und/oder parallel geschaltet werden.

Der Aufwand für die Herstellung der Isolierplatten und auch für die Befestigung der Baugruppen an den Isolierplatten ist verhältnismäßig hoch. Von Vorteil wäre ein Träger zum Tragen einer Mehrzahl von Kondensatorbaugruppen, wobei der Träger aus beliebigem Material, insbesondere wahlweise aus Kunststoff oder aus Metall gefertigt werden kann. Metall bietet eine hohe Stabilität und Dauerhaftigkeit.

DE 200 20 121 U1 beschreibt einen mechanischen Adapter für eine mit Bauelementen bestückte Flachbaugruppe. Die Flachbaugruppe besteht aus einer Platine sowie aus Kondensatoren. Es ist ein mechanischer Adapter vorgesehen, der mit Passstücken unmittelbar formschlüssig über die Kondensatoren der Flachbaugruppe gestülpt werden kann. Der Adapter ist beispielsweise mittels Plastikspritzguss gefertigt.

EP 1 589 547 A1 beschreibt eine Kondensatoreinheit und ein Verfahren zum Halten von Kondensatoren durch einen Halter. Es sind zylindrische Gehäuseabschnitte vorgesehen, in die jeweils ein Kondensator eingesetzt wird. Der Durchmesser der zylindrischen Gehäuseabschnitte ist leicht größer als der Durchmesser des Kondensators. Daher wird der Kondensator beim Einsetzen durch einen Presssitz gehalten. Der zylindrische Gehäuseabschnitt des Halters verformt sich dabei elastisch.

DE 197 23 455 C1 beschreibt einen Elektrolytkondensator, insbesondere zur Anwendung in Kondensatorbatterien, der in ein metallisches Gehäuse eingebaut ist und bei dem das Gehäuse durch eine, mit einer Montageplatte verschraubte, Ringschelle gehaltert ist. An der Ringschelle ist ein konisch ausgebildetes Teil angeordnet, das in eine an der Montageplatte angebrachte Bohrung eingreift. Beim Verschrauben der Ringschelle mit der Montageplatte wird das konische Teil in die Montagebohrung gezogen. Zur Vermeidung der Kerbgefahr ist ein Schutzring zwischen konischem Teil und Montageplatte angeordnet, der vorzugsweise aus Kunststoff besteht und auf seiner Innenseite konisch ausgebildet ist. Die Ringschelle wird mittels Schrauben mit der Montageplatte verbunden.

Es ist daher eine Aufgabe der vorliegenden Erfindung, eine Anordnung und ein Verfahren der eingangs genannten Art anzugeben, die das Halten einer Mehrzahl von Kondensatorbaugruppen erleichtert, wenn die Kondensatorbaugruppen am Umfang ihres Gehäuses potentialbehaftet sind.

Es wird vorgeschlagen, einen Träger zu verwenden, der für jede an dem Träger zu haltende Kondensatorbaugruppe eine Durchgangsöffnung aufweist. Die einzelnen Baugruppen werden so an dem Träger angeordnet, dass sie sich durch die Durchgangsöffnung hindurch erstrecken. Dabei werden die Baugruppen jeweils mit einem Lagerring kombiniert, über den sie mit dem Innenrand der Durchgangsöffnung in Kontakt sind. Der Lagerring ist ein ringförmiges Element, das dazu dient, die Baugruppe in der Durchgangsöffnung zu lagern. Auf diese Weise ist der Außenumfang der Baugruppe nicht direkt mit dem Innenrand der Durchgangsöffnung in Kontakt, sondern lediglich indirekt über den Lagerring. Der Lagerring kann zum Beispiel aus einem elektrisch isolierenden Material gefertigt werden, zum Beispiel aus Polypropylen oder Polyamid. Andere elektrisch isolierenden Materialien können ebenso verwendet werden. Falls der Außenumfang der Baugruppe jedoch nicht potentialbehaftet ist, kann auch ein Lagerring aus Metall oder einem anderen elektrisch leitenden Material verwendet werden. In allen diesen Fällen kann das Material des Trägers, der zum Beispiel ein plattenförmiger Träger mit einer Mehrzahl nebeneinander angeordneter Durchgangsöffnungen ist, ein beliebiges Material sein, zum Beispiel Metall. Der sich zum Beispiel umlaufend am Innenrand der Durchgangsöffnung um den Außenumfang der Baugruppe herum erstreckende Lagerring ermöglicht eine einfache Montage der Baugruppe in der Durchgangsöffnung und verhindert außerdem, wie erwähnt, den direkten mechanischen Kontakt zwischen Baugruppe und Träger.

Insbesondere wird folgendes vorgeschlagen: Eine Anordnung zum Halten einer Mehrzahl von elektrischen Kondensatorbaugruppen, insbesondere von Baugruppen, deren Gehäuse potenzialbehaftet ist, wobei die Anordnung Folgendes aufweist:
- einen Träger mit jeweils einer Durchgangsöffnung zum Einbringen einer der Baugruppen,
- zumindest einen Lagerring zum Lagern einer Baugruppe,
wobei der Lagerring derart auf die Abmessungen der Durchgangsöffnung und der Baugruppe abgestimmt ist, dass die Baugruppe, wenn sie sich durch die Durchgangsöffnung hindurch erstreckt, über den Lagerring mit dem Innenrand der Durchgangsöffnung in Kontakt ist, aber nicht direkt mit dem Innenrand der Durchgangsöffnung in Kontakt ist.

Ferner wird ein Verfahren zum Halten einer Mehrzahl von elektrischen Kondensatorbaugruppen vorgeschlagen, insbesondere von Baugruppen, deren Gehäuse potenzialbehaftet ist, wobei zur Montage der Baugruppen:
- jeweils eine Baugruppe in eine der Durchgangsöffnungen eines Trägers mit einer Mehrzahl von Durchgangsöffnungen eingebracht wird, sodass sich die Baugruppe durch die Durchgangsöffnung hindurch erstreckt,
- vor, während und/oder nach Einbringen der Baugruppe in die Durchgangsöffnung ein Lagerring in die Durchgangsöffnung eingebracht wird, sodass er zwischen dem Außenumfang der Baugruppe und dem Innenrand der Durchgangsöffnung angeordnet ist und die Baugruppe an dem Träger hält, sobald die Montage beendet ist,
sodass die Baugruppe über den Lagerring mit dem Innenrand der Durchgangsöffnung in Kontakt ist, aber nicht direkt mit dem Innenrand der Durchgangsöffnung in Kontakt ist. Ausgestaltungen des Verfahrens ergeben sich aus der folgenden Beschreibung von Ausgestaltungen der Anordnung und aus den beigefügten Patentansprüchen, die den Schutzumfang definieren, wobei die Erfindung durch das Verfahren gemäß Anspruch 8 und die Anordnung gemäß Anspruch 1 definiert ist.

Ferner weist die Anordnung einen Klemmring auf, der sich in einem montierten Zustand der Baugruppe derart zwischen dem Außenumfang der Baugruppe und dem Material des Trägers erstreckt, dass die Baugruppe, der Klemmring und der Lagerring durch Klemmwirkung an dem Innenrand der Durchgangsöffnung gehalten werden.

Das Halten der Baugruppe durch Klemmwirkung vereinfacht die Montage und sorgt dennoch für eine zuverlässige Halteverbindung zwischen Baugruppe und Träger. Insbesondere ist für jede Durchgangsöffnung, in der eine Baugruppe gehalten wird, jeweils ein Klemmring vorgesehen.

Durch die Durchgangsöffnung ist eine axiale Richtung definiert, die sich von einer Seite des Trägers durch die Durchgangsöffnung hindurch zu einer gegenüberliegenden Seite des Trägers erstreckt, wobei die Anordnung so ausgestaltet ist, dass der Klemmring zur Montage der Baugruppe in der axialen Richtung zu bewegen ist, um die Klemmwirkung zu erzeugen. Der Klemmring weist ein erstes Gewinde auf und der Lagerring weist ein zweites Gewinde auf, die derart miteinander zusammenwirken, dass durch eine Schraubbewegung des Lagerrings und/oder des Klemmrings der Klemmring in der axialen Richtung bewegt wird und dadurch in eine axiale Position gebracht wird, in der der Klemmring die Klemmwirkung erzeugt. Nicht zum Umfang der Ansprüche gehören andere Ausführungsformen, bei denen die axiale Bewegung des Klemmrings auf andere Weise bewirkt wird: Zum Beispiel könnte der Lagerring kein Gewinde aufweisen und das Gegengewinde an dem Innenrand der Durchgangsöffnung oder am Außenumfang der Baugruppe ausgestaltet sein. Auch könnte das Gewinde nicht am Klemmring ausgebildet sein, sondern zum Beispiel durch Ausbildung von miteinander zusammenwirkenden Gewinden an zumindest zwei der folgenden Teile: Träger, Lagerring, Baugruppe, zusätzliches Teil, bei einer entsprechenden Schraubbewegung eine axiale Bewegung bewirkt werden, die zur Entfaltung der Klemmwirkung des Klemmrings führt.

Der Klemmring weist zum Beispiel parallel zur axialen Richtung verlaufende Elemente auf, die sich in ihrem Verlauf bezüglich ihrer Abmessung in radialer Richtung verjüngen. Diese Elemente können mit entsprechenden Bereichen des Lagerrings zusammenwirken, um bei relativer axialer Bewegung des Lagerrings und des Klemmrings die Klemmwirkung zu entfalten. Die sich verjüngenden Elemente des Klemmrings müssen jedoch nicht zwangsläufig mit speziell für die Klemmwirkung ausgestalteten Bereichen des Lagerrings zusammenwirken. Vielmehr können diese Bereiche des Klemmrings auch mit dem Gehäuse, einem zusätzlichen Bauteil der Anordnung und/oder dem Innenrand der Durchgangsöffnung zusammenwirken. Ferner können die sich in axialer Richtung verjüngenden Bereiche von einem einzigen Element, zum Beispiel von einem ringförmigen Abschnitt des Lagerrings, gebildet sein.

Zum Beispiel kann die Durchgangsöffnung eine kreisförmige Öffnung sein, das heißt, einen kreisförmigen Öffnungsquerschnitt aufweisen. Insbesondere in diesem Fall kann es zu einem unbeabsichtigten Verdrehen des in der Durchgangsöffnung gelagerten Kondensators kommen. Daher wird vorzugsweise folgendes vorgeschlagen: Am Innenrand der Durchgangsöffnung ist zumindest eine sich in radialer Richtung erstreckende Ausnehmung angeordnet, wobei der Lagerring einen sich in radialer Richtung nach außen erstreckenden Vorsprung aufweist und wobei der Vorsprung derart in die Ausnehmung eingreift, dass der Lagerring gegen eine Drehbewegung in Umfangsrichtung des Randes der Durchgangsöffnung gesichert ist.

Vorzugsweise erstreckt sich der Lagerring in axialer Richtung über eine größere Länge hinweg als die Länge der Durchgangsöffnung. Auf diese Weise kann die Halterung der Baugruppe in der Durchgangsöffnung weiter stabilisiert werden.

Ferner ist es möglich, dass die Abmessungen des Lagerrings in ihrem Verlauf in axialer Richtung so gestaltet sind, dass der Lagerring mit einem Teilbereich in die Durchgangsöffnung eingebracht werden kann oder sogar durch die Durchgangsöffnung hindurchbewegt werden kann, ein anderer Teilbereich des Lagerrings jedoch einen größeren Querschnitt als die Durchgangsöffnung aufweist oder zumindest breiter als die Durchgangsöffnung ist, sodass der andere Teilbereich nicht in die Durchgangsöffnung eingebracht werden kann. Dadurch wird die Halteverbindung der Baugruppe an dem Träger weiter stabilisiert. Bei Verwendung eines Klemmrings kann ferner der Teilbereich des Lagerrings, der durch die Durchgangsöffnung hindurch bewegt wurde, bei Entfaltung der Klemmwirkung radial nach außen gedrückt werden, sodass dieser Teilbereich dagegen gesichert ist, unbeabsichtigt in axialer Richtung wieder durch die Durchgangsöffnung zurückbewegt zu werden.

Vorzugsweise wird die Baugruppe oder die Mehrzahl der Baugruppen nicht nur an einem Ende über einen Lagerring in einer Durchgangsöffnung des Trägers gehalten, sondern auch an einem in axialer Richtung entfernt gelegenen zweiten Bereich. Daher ist die Baugruppe besonders sicher und dauerhaft gelagert. Insbesondere wird daher vorgeschlagen, dass die Anordnung einen zweiten Träger mit zumindest einer zweiten Durchgangsöffnung zum Einbringen einer Baugruppe aufweist, wobei sich die Baugruppe im montierten Zustand durch eine der Durchgangsöffnungen des ersten Trägers und in einem anderen Bereich, der sich in der axialen Richtung entfernt von dem ersten Träger befindet, durch die zweite Durchgangsöffnung hindurch erstreckt und mittels eines zweiten Lagerrings in der zweiten Durchgangsöffnung gehalten wird.

Die Erfindung betrifft die Anordnung zum Halten einer Mehrzahl von Kondensatorbaugruppen, bei der die Kondensatorbaugruppe tatsächlich vorhanden ist. Insbesondere kann es sich dabei um einen Energiespeicher zum Speichern elektrischer Energie in den verschiedenen Kondensatorbaugruppen handeln.

Ausführungsbeispiele der Erfindung werden nun unter Bezugnahme auf die beigefügte Zeichnung beschrieben. Die einzelnen Figuren der Zeichnung zeigen:
- Fig. 1: ein erstes Ausführungsbeispiel für eine Anordnung mit einem Träger, einem Lagerring und einer Kondensatorbaugruppe,
- Fig. 2: den Lagerring gemäß Fig. 1,

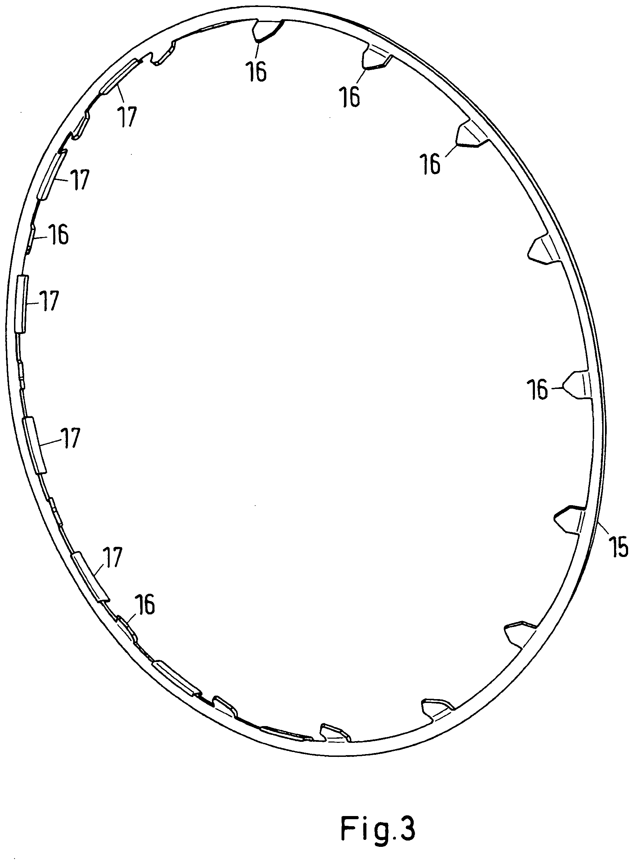

- Fig. 3: einen Befestigungsring der Anordnung gemäß Fig. 1,
- Fig. 4: einen Schnitt durch einen Teil der Anordnung gemäß Fig. 1,
- Fig. 5: eine zweite Anordnung mit Trägern und einer in Durchgangsöffnungen der Träger angeordneten Kondensatorbaugruppe,
- Fig. 6: einen axialen Schnitt durch einen Teilbereich der in Fig. 5 dargestellten Anordnung, wobei die Figur einen Zustand vor der Erzeugung einer Klemmwirkung durch axiale Bewegung eines Klemmrings darstellt,
- Fig. 7: einen Schnitt wie in Fig. 6, wobei die Figur jedoch den fertigen Zustand der Montage der Kondensatorbaugruppe in der Durchgangsöffnung darstellt,
- Fig. 8: einen Lagerring der in Fig. 5 gezeigten Anordnung,
- Fig. 9: einen Klemmring der in Fig. 5 gezeigten Anordnung,
- Fig. 10: einen Teilbereich der in Fig. 5 dargestellten Anordnung mit einem ringförmigen Werkzeugelement zum Erzeugen einer Schraubbewegung,
- Fig. 11: ein drittes Ausführungsbeispiel einer Anordnung mit einem Lagerring und einem Träger,
- Fig. 12: den Lagerring der Anordnung von Fig. 11,
- Fig. 13: eine perspektivische Darstellung der Befestigung einer Kondensatorbaugruppe an zwei Trägern mit jeweils einem Lagerring,
- Fig. 14: eine Anordnung mit einer Mehrzahl von Kondensatorbaugruppen, die elektrisch miteinander verbunden sind,
- Fig. 15: einen Teilbereich der Anordnung gemäß Fig. 14, wobei jedoch das elektrische Verbindungselement zum Verbinden zweier Kondensatorbaugruppen noch nicht mit den Kondensatorbaugruppen in Kontakt ist, und
- Fig. 16: einen axialen Längsschnitt durch eine Kondensatorbaugruppe und einen Lagerring des dritten Ausführungsbeispiels.

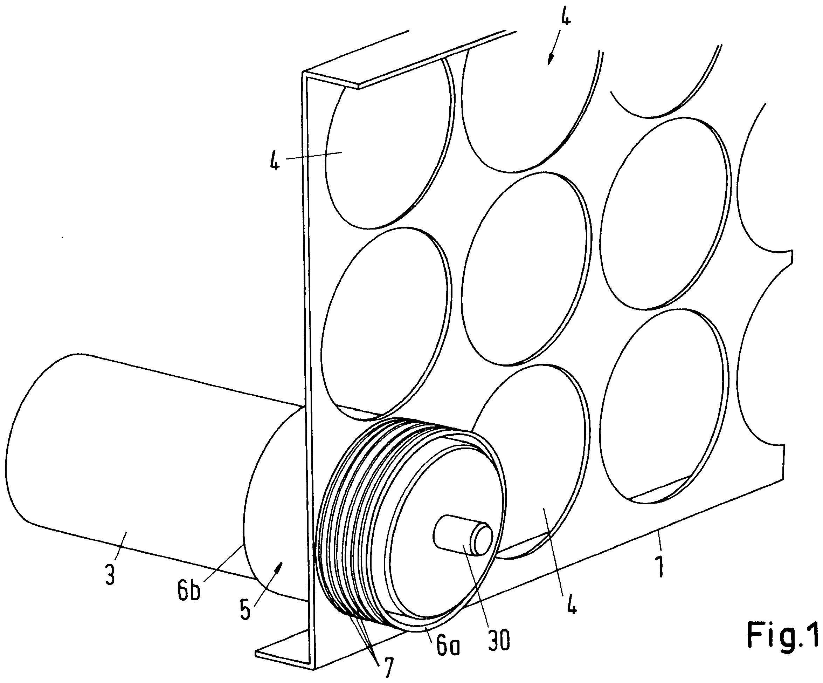

Fig. 1 zeigt eine erste Ausführungsform einer Anordnung mit einer Kondensatorbaugruppe 3, einem Lagerring 5 und einem Träger 1. Der Träger 1, der in Fig. 1 nicht vollständig dargestellt ist, weist eine Mehrzahl von kreisförmigen Durchgangsöffnungen 4 auf, die in Reihen und Spalten nebeneinander angeordnet sind. In einer dieser Durchgangsöffnungen 4, nämlich der links unten in Fig. 1 dargestellten Durchgangsöffnung 4, ist ein Lagerring 5 aus vorzugsweise elektrisch isolierendem Material angeordnet, sodass sich der Lagerring 5 durch die Durchgangsöffnung 4 (in axialer Richtung) hindurch erstreckt, wobei ein Teilbereich 6a sich in der Darstellung vor der Durchgangsöffnung 4 und ein weiterer Teilbereich 6b des Lagerrings 5 sich in der Darstellung hinter der Durchgangsöffnung 4 befindet.

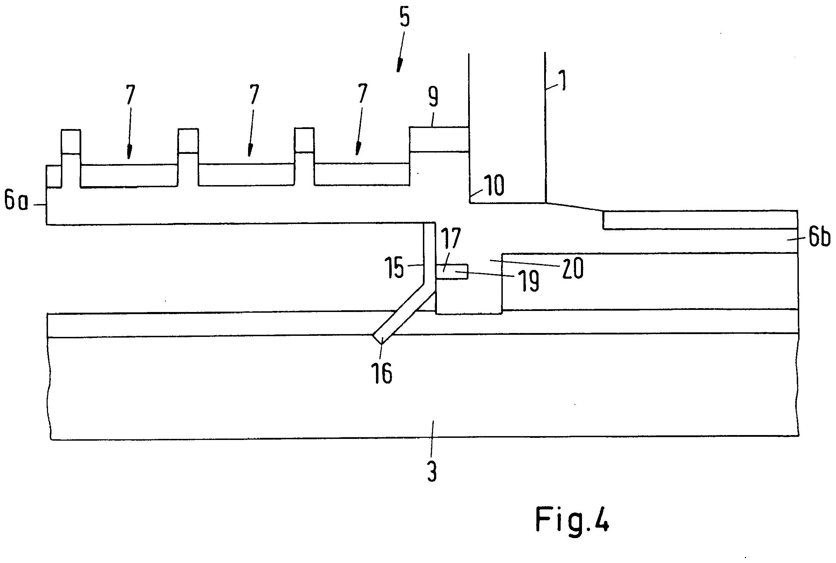

Anhand dieses Lagerrings 5 wird eine bevorzugte Gestaltung von Lagerringen beschrieben, die ansonsten auch anders ausgeführt werden können. Der Lagerring weist an seinem Außenumfang zumindest in einem Teilbereich 6a eine Mehrzahl von in Umfangsrichtung umlaufenden Nuten 7 auf. Dies erleichtert die manuelle Montage der Halteverbindung. Alternativ oder zusätzlich ist ein Teilbereich 6a des Lagerrings 5 so ausgestaltet, dass der Teilbereich 6a nicht durch die Durchgangsöffnung 4 hindurch gesteckt werden kann, da der Durchmesser des Teilbereichs 6a größer als der Innendurchmesser der Durchgangsöffnung 4 ist. Aus Fig. 4 ist erkennbar, dass das Material 9 am Ende des Teilbereichs 6a eine Anlagefläche 10 definiert, die umlaufend um die Durchgangsöffnung 4 an dem Material des Trägers 1 anliegt, ohne sich innerhalb der Durchgangsöffnung 4 zu befinden.

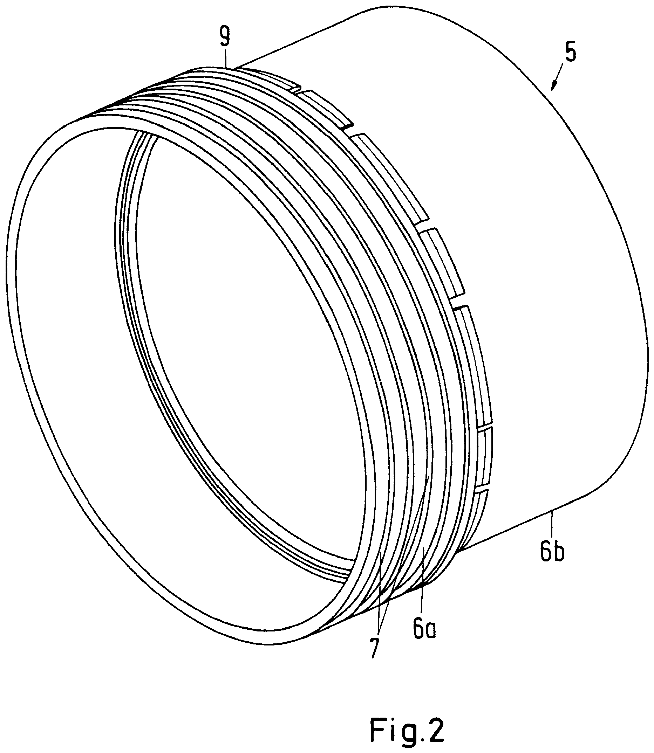

Die Gestaltung des Lagerrings 5 ist auch aus Fig. 2 erkennbar, die den Lagerring 5 allein darstellt.

Zu der Anordnung gemäß Fig. 1 gehört ein in Fig. 1 nicht erkennbarer Befestigungsring 15, zum Beispiel aus Metall, der an seiner radial innen liegenden Seite über den Innenumfang verteilt eine Mehrzahl von zu ihrem freien Ende spitz zulaufenden Vorsprüngen 16 aufweist. Dabei erstrecken sich die Vorsprünge 16 nicht lediglich radial nach innen, sondern auch in axialer Richtung. Diese Reuse 15 wird durch Einbringen weiterer Vorsprünge 17, die über den Umfang der Reuse 15 verteilt sind und sich entgegengesetzt zu der Erstreckungsrichtung der Vorsprünge 16 in axialer Richtung erstrecken, in eine Nut 19 (siehe Fig. 4) in einem radial nach innen vorspringenden Bereich 20 des Lagerrings 5 hineingedrückt. Anschließend werden der so vorbereitete Lagerring 5 mit der Reuse 15 einerseits und die zu haltende Baugruppe 3 andererseits in axialer Richtung so relativ zueinander verschoben (wobei die Baugruppe 3 in das Innere des Lagerrings 5 eingebracht wird), dass sich die Vorsprünge 16 an der gewünschten axialen Relativposition am Außenumfang der Baugruppe 3 in die Oberfläche der Baugruppe 3 hineinkrallen, wie es in Fig. 4 dargestellt ist.

Entweder wird der Lagerring 5 mit der darin gehaltenen Reuse 15 vor dem Einbringen der Baugruppe 3 in den Lagerring 5 oder nach dem Einbringen der Baugruppe 3 in die Durchgangsöffnung 4 des Trägers 1 eingebracht. Die fertig montierte Anordnung ist aus der Darstellung in Fig. 4 erkennbar.

Optional kann auch der Teilbereich 6b, der durch die Durchgangsöffnung 4 hindurch bewegt wird, um die fertig montierte Position zu erreichen, nach außen vorstehende Bereiche aufweisen, die aber das Hindurchbewegen des Bereichs 6b noch ermöglichen. Zum Beispiel können diese Bereiche leicht elastisch verformbar sein und/oder schleifend unter radialem Druck durch die Durchgangsöffnung 4 hindurchbewegt werden, sodass eine unbeabsichtigte Bewegung des Lagerrings 5 in die entgegen gesetzte Richtung erschwert oder unmöglich wird.

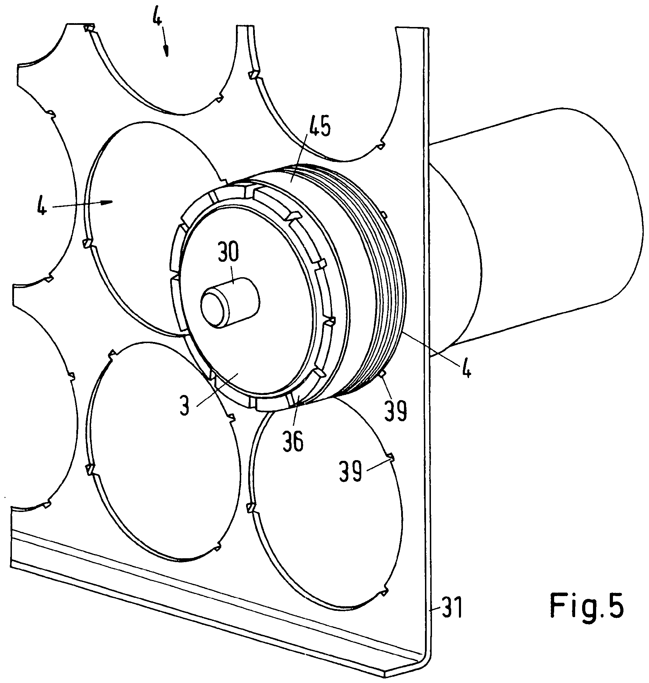

Eine zweite Ausführungsform ist in den Figuren 5 bis 10 dargestellt. Die Anordnung weist einen Träger 31 auf. Durch den Träger 31 erstreckt sich ein Lagerring 45. Die gehaltene Kondensatorbaugruppe 3 erstreckt sich innerhalb des Lagerrings 45 durch eine Durchgangsöffnung 4 in dem Träger 31 hindurch. In gleicher Weise kann die Baugruppe 3 an ihrem hinteren Ende in einem zweiten Träger gelagert sein.

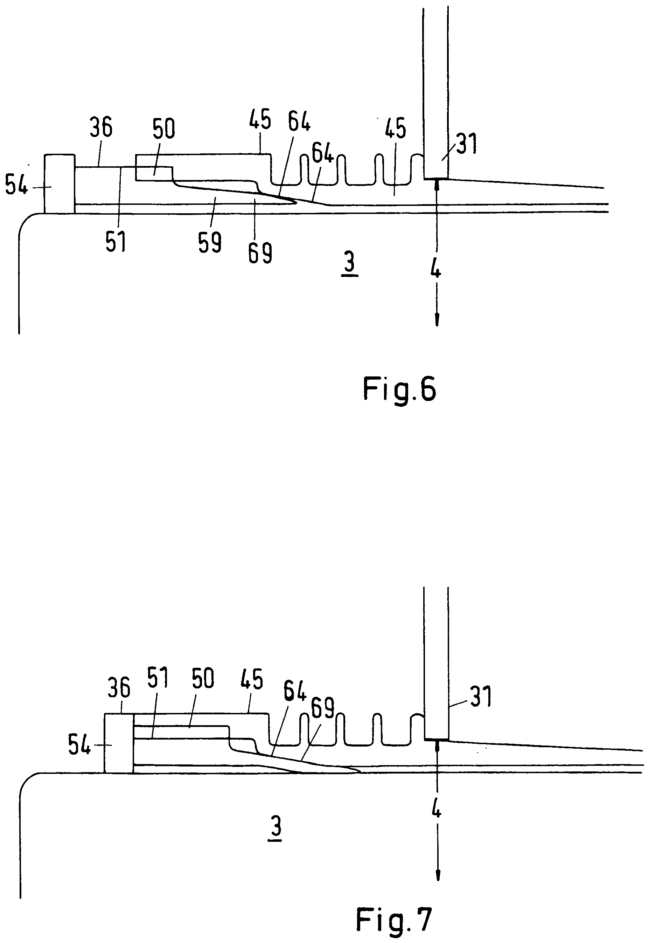

Zur sicheren und dauerhaften Befestigung der Baugruppe 3 ist in der Durchgangsöffnung 4 ein Klemmring 36 vorhanden, der sich jedoch (wie Fig. 6 und 7 zeigen) nicht bis in die Durchgangsöffnung 4 hineinerstreckt. Dennoch erzeugt er im montierten Zustand eine Klemmwirkung, das heißt Kräfte, die insbesondere in radialer Richtung wirken und die Baugruppe 3 durch Klemmwirkung an dem Träger 31 halten. Dabei wird die Klemmkraft von radial außen nach radial innen zunächst von dem Träger auf den Lagerring 45, dann von diesem auf den Klemmring 36 und wiederum von diesem auf die Außenoberfläche am Umfang der Baugruppe 3 übertragen. Eine Klemmkraft wird nicht direkt von dem Lagerring 45 auf die Baugruppe 3 übertragen.

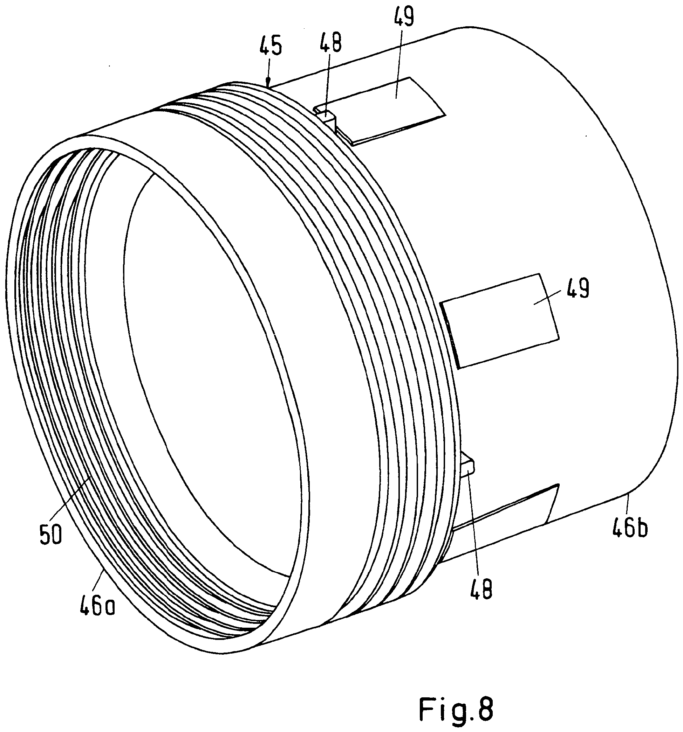

Fig. 8 zeigt ein Ausführungsbeispiel eines Lagerrings 45, der hinsichtlich der Formgestaltung des Außenumfangs wie der Lagerring 5 gemäß Fig. 2 gestaltet sein kann. Insbesondere kann der Lagerring wiederum einen ersten Bereich 46a und einen zweiten Bereich 46b aufweisen, wobei lediglich der zweite Bereich 46b durch die Durchtrittsöffnung 4 des Trägers 31 hindurch gesteckt werden kann, nicht aber der erste Bereich 46a. Auch weitere, anhand von Fig. 2 oder der Beschreibung des Lagerrings 5 beschriebene Merkmale können einzeln oder in beliebiger Kombination auch bei dem Lagerring gemäß Fig. 8 vorhanden sein. Wie in Fig. 8 dargestellt, kann die äußere Gestaltung, das heißt die Gestaltung am Außenumfang des Lagerrings 45 von der Gestaltung des Lagerrings 5 abweichen. Insbesondere weist dieser Lagerring am Übergangsbereich zwischen dem ersten Bereich 46a und dem zweiten Bereich 46b vom ersten Bereich 46a in axialer Richtung vorspringende Eingriffselemente 48 auf, von denen in Fig. 8 zwei Stück sichtbar sind. Zum Beispiel finden sich in gleichen Winkelabständen um die Längsachse zwei weitere solcher Eingriffselemente am Außenumfang des Lagerrings 45. Die Zahl solcher Vorsprünge ist jedoch nicht auf vier beschränkt. Vielmehr reicht prinzipiell bereits ein einziger solcher Vorsprung aus. Es können jedoch auch mehrere solcher Vorsprünge in unterschiedlichen Winkelabständen vorgesehen sein. In jedem Fall weist der Innenrand der Durchgangsöffnungen oder zumindest einer Durchgangöffnung des Trägers 31 (wie beispielsweise durch Bezugszeichen 39 an Träger 31 in Fig. 5 angedeutet ist), zumindest eine entsprechende Aussparung auf, so dass alle Vorsprünge am Lagerring in eine der Aussparungen 39 eingebracht werden können und auf diese Weise ein unbeabsichtigtes Verdrehen des Lagerrings um die in axialer Richtung verlaufende Längsachse verhindert wird.

Ähnlich wie bei dem Lagerring 5 gemäß Fig. 2 können am Außenumfang des zweiten Bereichs 46b radial nach außen vorspringende Bereiche 49 ausgebildet sein, die zum Beispiel in axialer Richtung zu dem ersten Bereich 46a gerichtet ansteigend sich von dem Niveau des Außenumfangs 46b erheben und an ihrem dem ersten Bereich 46a nächstgelegenem Ende eine sich in radialer Richtung erstreckende Kante aufweisen. Dabei ist der Abstand der Kante von dem ersten Bereich 46a vorzugsweise so groß wie die Dicke der Durchgangsöffnung des Trägers 31 in axialer Richtung. Auf diese Weise kann der Lagerring 45 mit dem freien Ende des zweiten Bereichs 46b voran durch die Durchgangsöffnung 4 hindurch gesteckt werden, bis die Stirnfläche des ersten Bereichs 46a an dem Material des Trägers 31 anliegt. In diesem Fall verhindert der Vorsprung 49 mit seiner Kante, dass der Lagerring 45 unbeabsichtigt aus der Durchgangsöffnung wieder entfernt wird oder sich innerhalb der Durchgangsöffnung in axialer Richtung bewegen kann.

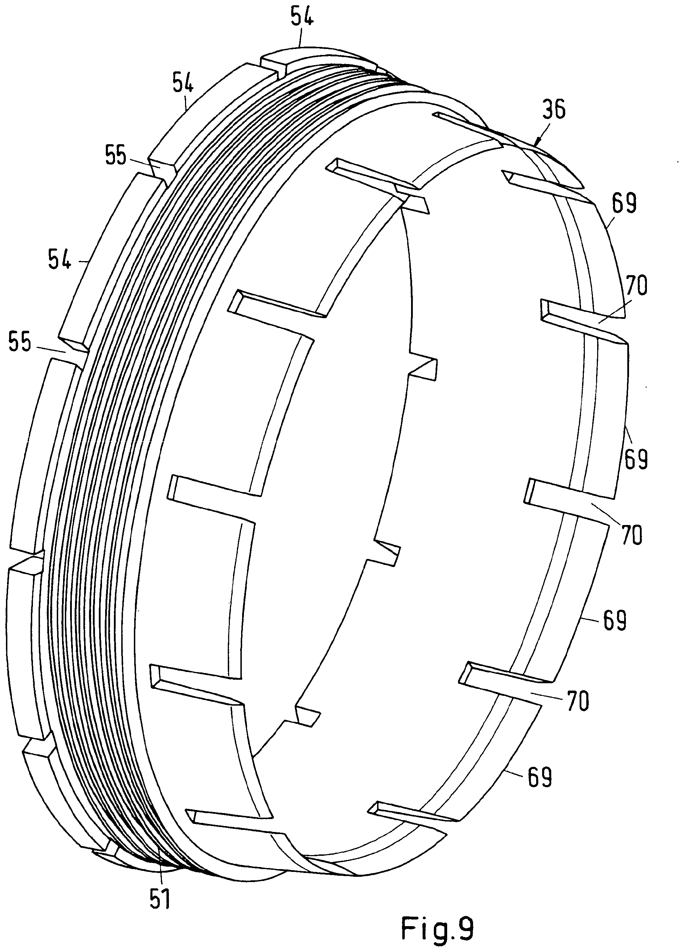

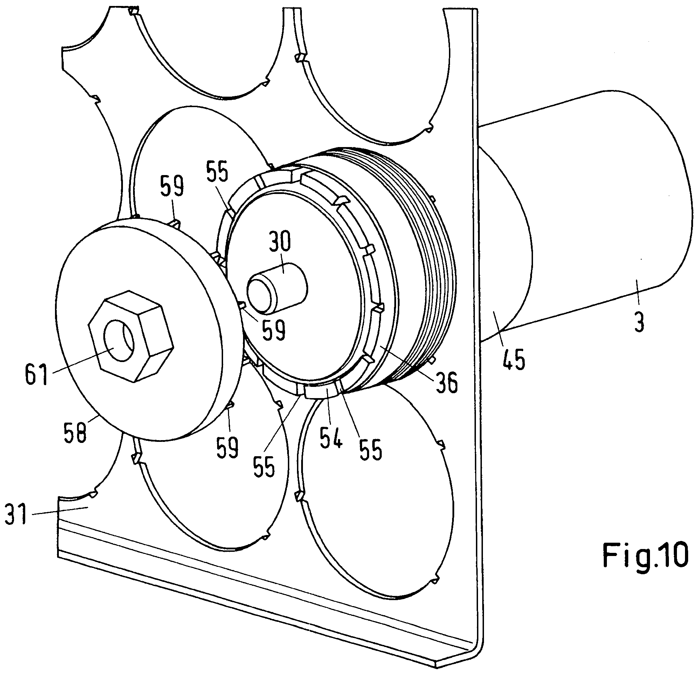

Ein weiteres Merkmal, das ebenfalls anhand des Ausführungsbeispiels gemäß Fig. 8 erläutert wird, wie die anderen Merkmale, die zuvor beschrieben wurden, aber auch bei anderen Ausführungsformen einzeln oder in Kombination mit anderen Merkmalen vorhanden sein, ist ein Innengewinde in dem Abschnitt des ersten Bereichs 46a, der sich von dem freien Ende des Lagerrings 45 in Richtung des zweiten Bereichs 46b erstreckt. Das Innengewinde ist in Fig. 8 mit dem Bezugszeichen 50 bezeichnet. Entsprechend dem Innengewinde weist der in Fig. 9 dargestellte Klemmring 36 ein Außengewinde 51 an seinem Außenumfang auf. Allerdings erstreckt sich bei dem in Fig. 9 dargestellten Ausführungsbeispiel das Außengewinde 51 nicht bis zu dem freien Ende des Klemmrings 36 in axialer Richtung. Vielmehr weist der Klemmring 36 an diesem freien Ende eine Mehrzahl von ringförmigen Segmenten 54 auf, die von ihren benachbarten Segmenten 54 jeweils durch eine Aussparung 55 getrennt sind. Wie Fig. 10 zeigt, kann in diese Aussparungen 55 jeweils ein Vorsprung 59 eines Montagewerkzeugs 58 eingesetzt werden. Das Montagewerkzeug 58 ist ringförmig ausgebildet und weist in seinem zentralen Bereich eine Durchgangsöffnung 61 auf, wobei die Durchgangsöffnung 61 von einem sechskant-förmigen Material gebildet wird, um zum Beispiel einen Schraubenschlüssel ansetzen zu können. Wenn das Montagewerkzeug 58 verwendet wird, erstreckt sich ein in axialer Richtung vorspringender Kontaktstift 30 (siehe auch Fig. 1, Fig. 5 und Fig. 10) zumindest in die Durchgangöffnung 61 hinein. Dieser Kontaktstift 30 der Kondensatorbaugruppe 3 dient dem elektrischen Anschluss der Baugruppe 3.

Mit Hilfe des Montagewerkzeugs 58 kann der Klemmring 36 in axialer Richtung in den Lagerring 45 eingeschraubt werden, wodurch sich am in axialer Richtung vorderen Ende, das dem in axialer Richtung hinteren Ende mit dem Segmenten 54 gegenüberliegt, im Querschnitt zungenförmige, d.h. spitz zulaufende Elemente 69 (wie in Fig. 6 und 7 gezeigt) zwischen das Material des Lagerrings 45 und die Baugruppe 3 schieben und auf diese Weise die erwünschte Klemmwirkung erzeugen.

Generell, nicht nur bei der in den Fig. 6, 7 und 9 gezeigten Ausführungsform des Klemmrings, kann ein Klemmring an seinem in axialer Richtung vorne liegenden Ende zumindest einen Bereich aufweisen, der sich in Richtung des freien Endes verjüngt, insbesondere derart verjüngt, dass die in radialer Richtung gemessene Dicke des freien Endes abnimmt. Eine derartige zungenartige Gestaltung ermöglicht die Erzeugung der erwünschten Klemmwirkung in einfacher Weise.

Optional, und wie zum Beispiel bei dem Ausführungsbeispiel gemäß Fig. 6 und 7 gezeigt, kann der Lagerring an seinem Innenumfang einen im axialen Längsschnitt schräg von radial außen nach radial innen und sich gleichzeitig in axialer Richtung erstreckenden Oberflächenbereich aufweisen, entlang dem sich das zungenartige freie Ende des Klemmrings bei seiner axialen Bewegung bewegt. Ein solcher abgeschrägter Oberflächenbereich ist in Fig. 6 und 7 zum Beispiel mit dem Bezugszeichen 64 bezeichnet. In der fertig montierten, in Fig. 7 dargestellten Position erstreckt sich das freie Ende des Klemmrings 36 sogar jenseits des abgeschrägten Bereichs des Lagerrings 45.

In dem in Fig. 9 dargestellten Ausführungsbeispiel sind die zungenartigen Elemente 69 gleichmäßig über den Umfang verteilt und jeweils durch eine Aussparung 70 in Umfangsrichtung voneinander getrennt. Insbesondere wenn das zum Beispiel verwendete Kunststoffmaterial unter dem Klemmdruck eine plastische Verformung vollzieht, könnte jedoch auch auf die Aussparungen 70 verzichtet werden.

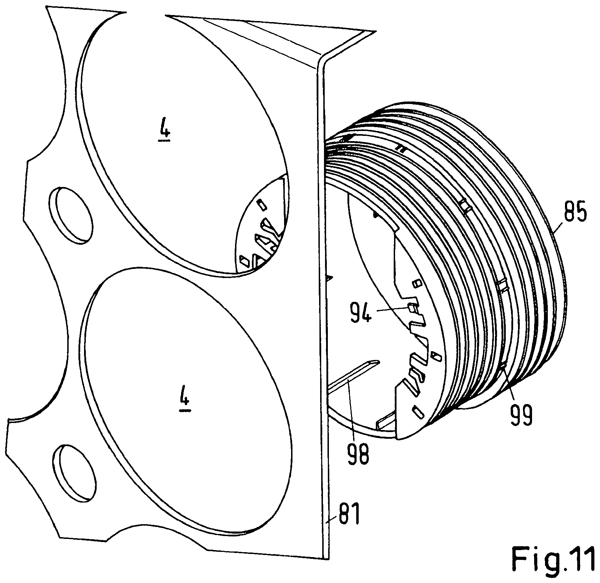

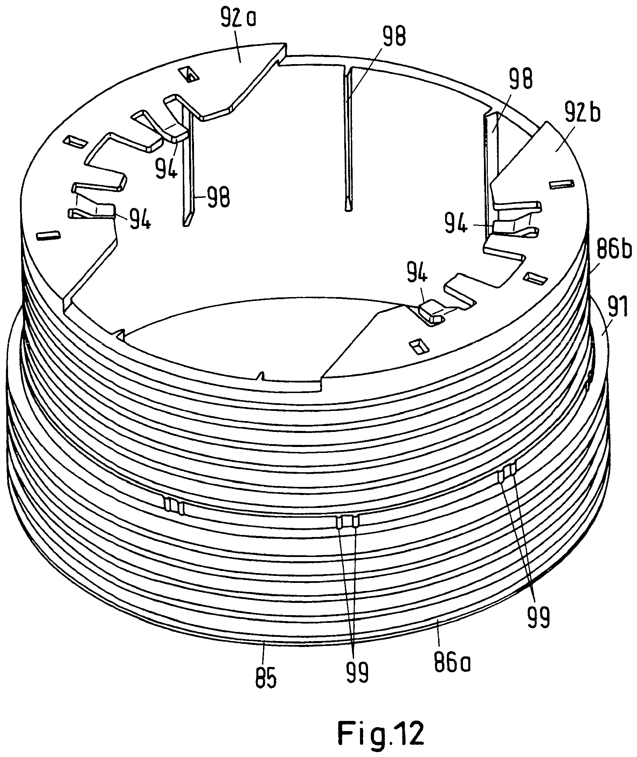

Eine weitere Ausführungsform eines Lagerrings und einer entsprechenden Anordnung wird nun anhand von Fig. 11 und 12 beschrieben. Der Lagerring 85 weist wiederum zwei in axialer Richtung hintereinander liegende Bereiche 86a, 86b auf. Mit dem Bereich 86b wird der Lagerring in axialer Richtung durch die entsprechende Durchgangöffnung 4 eines Trägers 81 hindurch gesteckt, bis eine Anschlagsfläche 91 des ersten Bereichs 86a an dem Material des Trägers 81 anstößt.

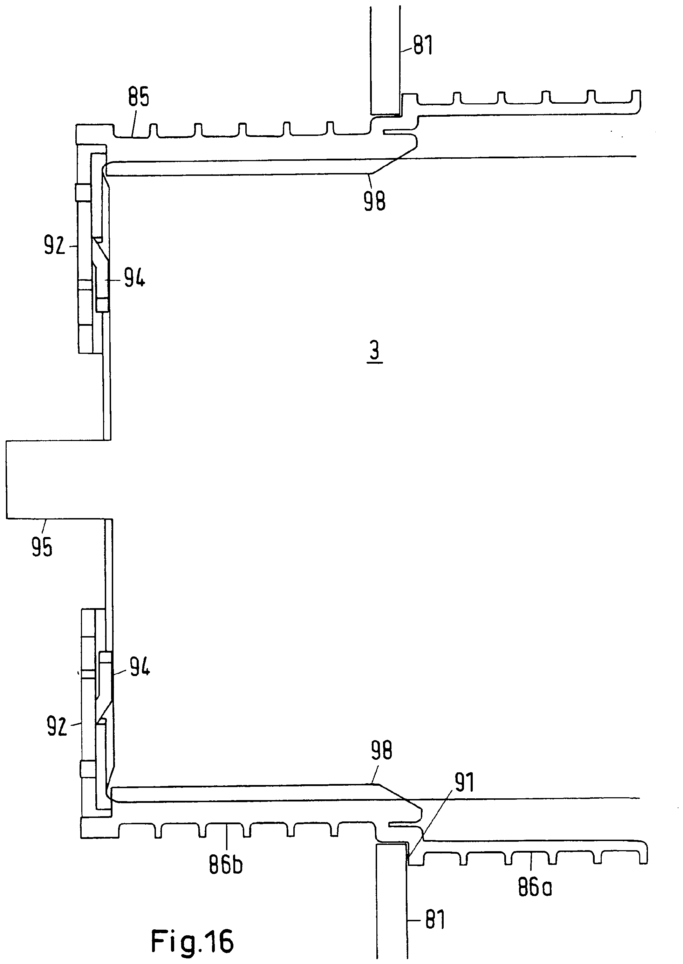

Wie insbesondere Fig. 12 gut erkennen lässt, weist der Lagerring 85 an seinem Innenumfang eine Mehrzahl von vorspringenden, linienartig in axialer Richtung verlaufenden Bereichen 98 auf. Die in radialer Richtung innenliegenden Enden dieser Bereiche 98 sind so positioniert, dass eine von dem Lagerring 85 gehaltene Kondensatorbaugruppe 3 von den Bereichen 98 durch Klemmwirkung gehalten wird (siehe auch Fig. 16).

Ferner weist der Bereich 86b unmittelbar vor der Anschlagsfläche 91 an seinem Außenumfang eine Mehrzahl von radial nach außen vorspringenden Bereichen 99 auf, mit denen sich der Lagerring 85 unter Erzeugung einer Klemmwirkung am Innenrand einer Durchgangsöffnung 4 des Trägers 81 abstützt, wenn der Lagerring in der Durchgangsöffnung 4 montiert ist. Sowohl das Material der Bereiche 99 als auch der Bereiche 98 kann sich bei Entstehung der Klemmwirkung elastisch verformen.

An seinem freien Ende weist der Bereich 86b radial nach innen verlaufende Bereiche 92a, 92b auf. Im Ausführungsbeispiel sind zwei solcher Bereiche 92 gebildet, die in radialer Richtung einander gegenüberliegen. Die Bereiche 92 verhindern, dass ein in dem Lagerring 85 gelagerter Kondensator aus dem freien Ende des zweiten Bereichs 86b austreten kann.

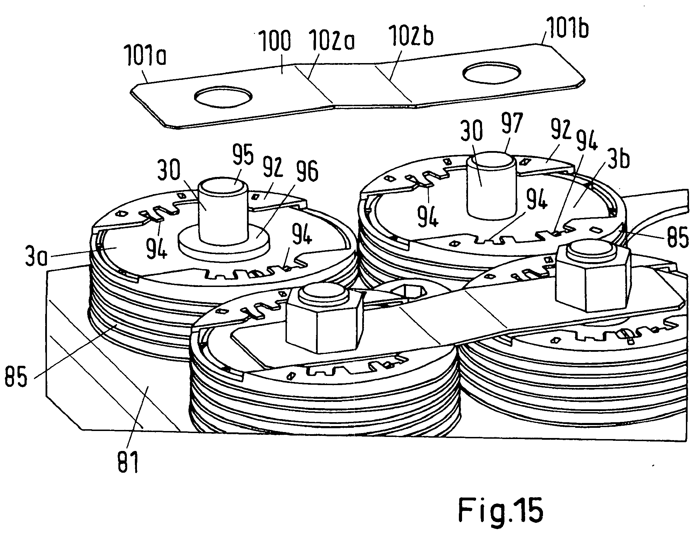

In besonderer Ausgestaltung der Bereiche 92 weist zumindest ein Bereich 92 an seinem radial innen liegenden Rand einen Vorsprung 94 auf, der in axialer Richtung bewegbar ist, wenn eine entsprechende Anpresskraft von der gelagerten Kondensatorbaugruppe auf den Vorsprung 94 aufgebracht wird. Dabei befindet sich das freie Ende des Vorsprungs 94 im entspannten Zustand, wenn keine axiale Kraft auf ihn ausgeübt wird, in einer axialen Position, die vor (in der Darstellung von Fig. 12 unterhalb) des Bereichs 92 liegt. Daher kann die Kondensatorbaugruppe, wenn sie nicht die zur Verformung des Vorsprungs 94 erforderliche Kraft aufbringt oder diese nur teilweise aufbringt, lediglich den Vorsprung 94, nicht aber den Bereich 92 berühren. Abhängig von der axialen Kraft können Kondensatorbaugruppen daher in einer unterschiedlichen axialen Position in dem Lagerring 85 gelagert sein. Zum Beispiel zeigt Fig. 15 links eine Kondensatorbaugruppe 3a, die auch den Bereich 92 berührt, während rechts in Fig. 15 eine Kondensatorbaugruppe 3b gezeigt ist, die lediglich die Vorsprünge 94 berührt, nicht aber den Bereich 92. Auf diese Weise ist es möglich, einen sicheren Verpolschutz (das heißt einen Schutz vor dem Verbinden der falschen elektrischen Anschlüsse von verschiedenen Kondensatorbaugruppen) zu realisieren. Zum Beispiel ist der Anschluss 30a der Kondensatorbaugruppe 3a außer mit einem vorspringenden Kontaktstift auch mit einem ringförmigen Bereich 96 versehen, der einen größeren Außendurchmesser als der Kontaktstift 95 hat. Dieser Ring 96 bedeutet, dass es sich um den Anschlusspol einer ersten Art (zum Beispiel der Pluspol) handelt.

Dagegen weist der Anschlussstift 97 des rechts in Fig. 15 dargestellten Kondensators keinen solchen zusätzlichen Ring auf. Dadurch ist ein elektrischer Anschlusspol der anderen Art (zum Beispiel der Minuspol) gekennzeichnet.

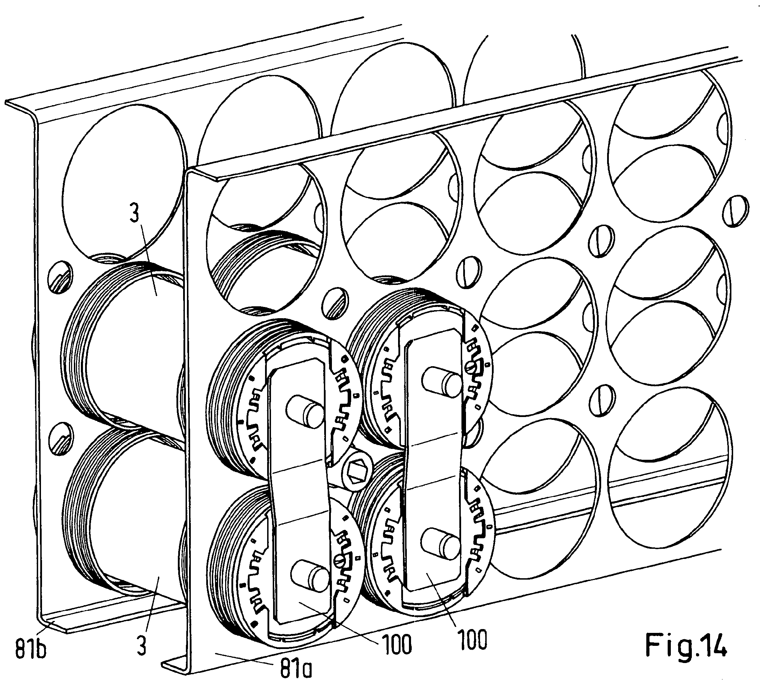

Zum Beispiel sollen die Kondensatoren 3a, 3b in Reihe geschaltet werden. Hierzu wird das oben in Fig. 15 dargestellte Verbindungselement 100 verwendet, das für jeden der Kontaktstifte 95, 97 jeweils eine Durchtrittsöffnung aufweist. Zum Beispiel Fig. 14 zeigt den montierten Zustand. Da sich das stirnseitige, freie Ende des ringförmigen Bereichs 96 an einer anderen axialen Position (in Fig. 15 höher) befindet als die stirnseitige Fläche des Kondensators 3b, weist das Verbindungselement 100 in seinem mittleren Bereich einen zweifach geknickten Verlauf auf, so dass die beiden Enden 101a, 101b zwar parallel zueinander verlaufen, nicht aber in der selben Ebene. Die Knicklinien sind mit den Bezugszeichen 102a, 102b bezeichnet. Diese Ausgestaltung des Verbindungselements 100 trägt ebenfalls zum Verpolschutz bei. Würden die beiden in Reihe zu schaltenden Kondensatorbaugruppen anders als in Fig. 15 dargestellt mit dem selben Pol (zum Beispiel Pluspol) nebeneinander liegen, würde dies dadurch auffallen, dass entweder beide Pole einen oder keinen ringförmigen Bereich 96 hätten. Bei Befestigung des Verbindungselements 100 mit dem abgeknickten mittleren Bereich an den Kontaktstiften (zum Beispiel durch Aufschrauben von Muttern auf ein Außengewinde der Kontaktstifte) würde die Oberfläche des Verbindungselements 100 nicht so weit wie möglich vollflächig entweder an dem stirnseitigen Ende der ringförmigen Bereiche oder dem stirnseitigen Ende des Gehäuses der Baugruppe anliegen und daher leicht erkannt werden können. Anders ausgedrückt führt die doppelt abgewinkelte Gestaltung der Verbindungselemente an den entgegen gesetzten axialen Enden der Baugruppen dazu, dass die Baugruppen aufgrund der Befestigung der Verbindungselemente an den Kontaktpolen in eine entsprechende axiale Position gebracht werden. Sind die Baugruppen falsch gepolt, das heißt verkehrt herum gelagert, würde die Oberfläche zumindest eines Verbindungselements nicht so vollflächig wie möglich an einer der Baugruppen anliegen.

Aus Fig. 15 ist auch noch erkennbar, dass die sich in radialer Richtung nach innen erstreckenden Bereiche 92 der Lagerringe 85 zwischen sich einen Zwischenraum freilassen, in den sich das Verbindungselement 100 im montierten Zustand erstrecken kann.

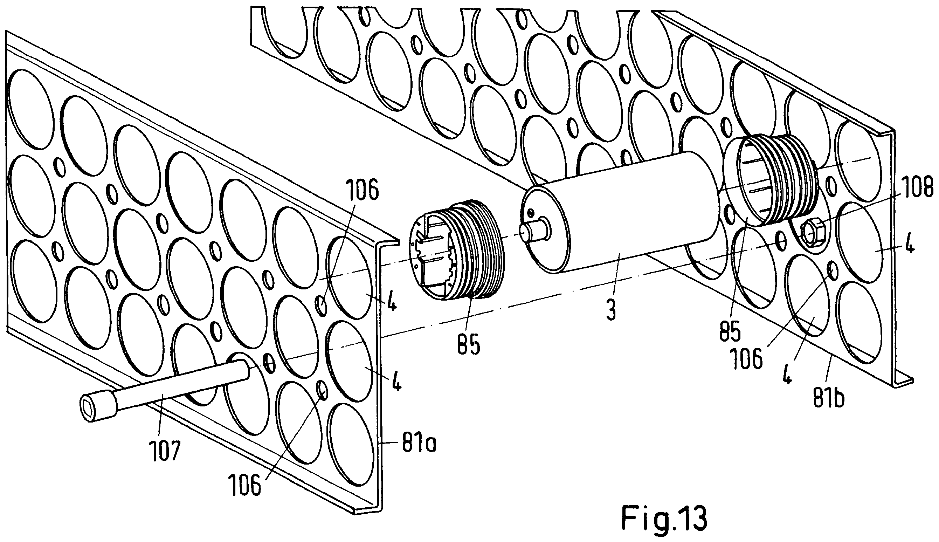

Aus Fig. 13 ist erkennbar, wie eine Kondensatorbaugruppe 3 mit Hilfe von zwei Lagerringen, zum Beispiel der Art von Lagerringen, die anhand von Fig. 11 und Fig. 12 beschrieben wurde, und mit Hilfe von zwei Trägern 81a, 81b sicher gehalten werden kann. Die Träger 81 weisen zwischen den Durchgangsöffnungen 4 für die Montage der Kondensatorbaugruppen weitere Durchgangsöffnungen 106 auf. Zum Beispiel mit Hilfe von Schraubbolzen 107 und Muttern 108 werden die Träger 81a, 81b miteinander verschraubt, sodass die Baugruppen nicht unbeabsichtigt aus den Lagerringen 85 heraustreten können.

Fig. 14 zeigt den montierten Zustand mit insgesamt vier montierten Kondensatorbaugruppen 3, von denen jeweils die übereinander liegenden an der vorne liegenden axialen Seite über ein doppelt abgeknicktes Verbindungselement 100 elektrisch miteinander verbunden sind. Dabei sind die Verbindungselemente 100 noch nicht an den stirnseitigen Kontaktflächen der Baugruppen 3 festgeschraubt oder auf andere Weise befestigt.

Fig. 16 zeigt einen axialen Längsschnitt durch einen axialen Endbereich einer Kondensatorbaugruppe 3 und durch einen in diesem Endbereich angeordneten Lagerring 85. Man erkennt links in der Figur den sich in radialer Richtung nach innen erstreckenden Bereich 92 mit dem in axialer Richtung leicht versetzten Vorsprung 94. Generell gilt, dass die Vorsprünge 94 es ermöglichen, dass die Kondensatorbaugruppe in axialer Richtung leicht verschoben wird, insbesondere wenn sich an beiden aneinander gegenüberliegenden axialen Enden der Baugruppe jeweils ein oder mehrere solcher Vorsprünge befinden. Zum Beispiel wird die Verschiebung in axialer Richtung, wie erwähnt, durch die Verbindungselemente 100 bewirkt, wenn diese an den Kontaktstiften befestigt sind.

## Patentansprüche

1. Anordnung zum Halten einer Mehrzahl von elektrischen Kondensatorbaugruppen (3), insbesondere von Baugruppen, deren Gehäuse potenzialbehaftet ist, wobei die Anordnung Folgendes aufweist:
- einen Träger (31) mit jeweils einer Durchgangsöffnung (4) zum Einbringen einer der Baugruppen (3),
- zumindest einen Lagerring (45) zum Lagern einer Baugruppe (3),
wobei der Lagerring (45) derart auf die Abmessungen der Durchgangsöffnung (4) und der Baugruppe (3) abgestimmt ist, dass die Baugruppe (3), die sich durch die Durchgangsöffnung (4) hindurch erstreckt, über den Lagerring (45) mit dem Innenrand der Durchgangsöffnung (4) in Kontakt ist, aber nicht direkt mit dem Innenrand der Durchgangsöffnung (4) in Kontakt ist,
wobei die Anordnung einen Klemmring (36) aufweist, der sich in einem montierten Zustand der Baugruppe (3) derart zwischen dem Außenumfang der Baugruppe (3) und dem Material des Trägers (31) erstreckt, dass die Baugruppe (3), der Klemmring (36) und der Lagerring (45) durch Klemmwirkung an dem Innenrand der Durchgangsöffnung (4) gehalten werden,
wobei durch die Durchgangsöffnung (4) eine axiale Richtung definiert ist, die sich von einer Seite des Trägers (31) durch die Durchgangsöffnung (4) hindurch zu einer gegenüberliegenden Seite des Trägers (31) erstreckt, wobei die Anordnung so ausgestaltet ist, dass der Klemmring (36) zur Montage der Baugruppe (3) in der axialen Richtung zu bewegen ist, um die Klemmwirkung zu erzeugen,
**dadurch gekennzeichnet, dass**
der Klemmring (36) ein erstes Gewinde (51) aufweist und der Lagerring (45) ein zweites Gewinde (50) aufweist, die derart miteinander zusammenwirken, dass durch eine Schraubbewegung des Lagerrings (45) und/oder des Klemmrings (36) der Klemmring (36) in der axialen Richtung bewegt wird und dadurch in eine axiale Position gebracht wird, in der der Klemmring (36) die Klemmwirkung erzeugt.

2. Anordnung nach dem vorhergehenden Anspruch, wobei der Lagerring (45) aus einem elektrisch isolierenden Material besteht.

3. Anordnung nach einem der vorhergehenden Ansprüche, wobei der Träger (31) aus einem elektrischen leitfähigem Material besteht.

4. Anordnung nach einem der vorhergehenden Ansprüche, wobei der Träger (31) einen plattenförmigen Bereich aufweist, in dem die Durchgangsöffnungen (4) nebeneinander angeordnet sind.

5. Anordnung nach einem der vorhergehenden Ansprüche, wobei am Innenrand der Durchgangsöffnung (4) zumindest eine sich in radialer Richtung erstreckende Ausnehmung (39) angeordnet ist, wobei der Lagerring (45) einen sich in radialer Richtung nach außen erstreckenden Vorsprung (48) aufweist und wobei der Vorsprung (48) derart in die Ausnehmung (39) eingreift, dass der Lagerring (45) gegen eine Drehbewegung in Umfangsrichtung des Randes der Durchgangsöffnung gesichert ist.

6. Anordnung nach einem der vorhergehenden Ansprüche, wobei die Anordnung einen zweiten Träger mit zumindest einer zweiten Durchgangsöffnung (4) zum Einbringen einer der Baugruppen (3) aufweist und wobei sich die Baugruppe (3) im montierten Zustand durch eine der Durchgangsöffnungen (4) des ersten Trägers (31) und in einem anderen Bereich, der sich in der axialen Richtung entfernt von dem ersten Träger (31) befindet, durch die zweite Durchgangsöffnung (4) hindurch erstreckt und mittels einem zweiten Lagerring (45) in der zweiten Durchgangsöffnung (4) gehalten wird.

7. Energiespeicher mit der Anordnung nach einem der vorhergehenden Ansprüche, wobei die Kondensatorbaugruppen (3) elektrisch miteinander verbunden sind.

8. Verfahren zum Halten einer Mehrzahl von elektrischen Kondensatorbaugruppen (3), insbesondere von Baugruppen (3), deren Gehäuse potenzialbehaftet ist, wobei zur Montage der Baugruppen (3):
- jeweils eine Baugruppe (3) in eine der Durchgangsöffnungen (4) eines Trägers (31) mit einer Mehrzahl von Durchgangsöffnungen (4) eingebracht wird, sodass sich die Baugruppe (3) durch die jeweilige Durchgangsöffnung (4) hindurch erstreckt,
- vor, während und/oder nach Einbringen der Baugruppe (3) in die jeweilige Durchgangsöffnung (4) ein Lagerring (45) in die jeweilige Durchgangsöffnung (4) eingebracht wird, sodass er zwischen dem Außenumfang der Baugruppe (3) und dem Innenrand der Durchgangsöffnung (4) angeordnet ist und die Baugruppe (3) an dem Träger (31) hält, sobald die Montage beendet ist,
sodass die Baugruppe (3), sobald die Montage beendet ist, über den Lagerring mit dem Innenrand der Durchgangsöffnung (4) in Kontakt ist, aber nicht direkt mit dem Innenrand der Durchgangsöffnung (4) in Kontakt ist,
wobei die Baugruppe (3) unter Verwendung eines Klemmrings (36), der sich in einem montierten Zustand der Baugruppe (3) zwischen dem Außenumfang der Baugruppe (3) und dem Material des Trägers (31) erstreckt, an dem Träger (31) montiert wird, sodass die Baugruppe (3), der Klemmring (36) und der Lagerring (45) durch Klemmwirkung an dem Innenrand der Durchgangsöffnung (4) gehalten werden,
wobei durch die Durchgangsöffnung (4) eine axiale Richtung definiert ist, die sich von einer Seite des Trägers (31) durch die Durchgangsöffnung (4) hindurch zu einer gegenüberliegenden Seite des Trägers (31) erstreckt, wobei der Klemmring (36) zur Montage der Baugruppe (3) in der axialen Richtung bewegt wird, um die Klemmwirkung zu erzeugen,
**dadurch gekennzeichnet, dass**
der Klemmring (36) durch eine Schraubbewegung des Lagerrings (45) und/oder des Klemmrings (36) und durch Zusammenwirken eines ersten Gewindes des Klemmrings mit einem zweiten Gewinde des Lagerrings, in der axialen Richtung bewegt wird und dadurch in eine axiale Position gebracht wird, in der der Klemmring (36) die Klemmwirkung erzeugt.

9. Verfahren nach dem vorhergehenden Anspruch, wobei ein Material, das den Außenumfang der Baugruppe (3) bildet, durch den Lagerring (45) gegen das Material des Trägers (31) elektrisch isoliert wird.

10. Verfahren nach Anspruch 8 oder 9, wobei der Lagerring (45) derart in der Durchgangsöffnung (4) angeordnet wird, dass er sich am Innenrand der Durchgangsöffnung (4) umlaufend um den Außenumfang der Baugruppe (3) herum erstreckt.

11. Verfahren nach einem der Ansprüche 8 - 10, wobei die Baugruppe (3) in voneinander beabstandeten axialen Bereichen jeweils über einen Lagerring (45) an einem Träger (31,81a,81b) befestigt wird.

## Claims

1. An arrangement for holding a plurality of electric capacitor assemblies (3), in particular assemblies of which the housing is non-floating, wherein the arrangement comprises the following:
- a carrier (31) with a through-opening (4) for inserting one of the assemblies (3),
- at least one bearing ring (45) for mounting one assembly (3),
wherein the bearing ring (45) is matched to the dimensions of the through-opening (4) and of the assembly (3) in such a way that the assembly (3) which extends through the through-opening (4) is in contact with the inner edge of the through-opening (4) by way of the bearing ring (45) but is not directly in contact with the inner edge of the through-opening (4), and
wherein the arrangement has a clamping ring (36) which, when the assembly (3) is installed, extends between the outer circumference of the assembly (3) and the material of the carrier (31) in such a way that the assembly (3), the clamping ring (36) and the bearing ring (45) are held on the inner edge of the through-opening (4) by clamping action,
wherein an axial direction is defined by the through-opening (4) and extends from one side of the carrier (31) through the through-opening (4) to an opposite side of the carrier (31), wherein the arrangement is designed such that, to install the assembly (3), the clamping ring (36) must be moved in the axial direction in order to produce the clamping action,
**characterised in that**
the clamping ring (36) has a first thread (51) and the bearing ring (45) has a second thread (50), which cooperate with one another in such a way that the clamping ring (36) is moved in the axial direction by a screwing motion of the bearing ring (45) and/or the clamping ring (36) and is thus brought into an axial position, in which the clamping ring (36) produces the clamping action.

2. The arrangement according to the preceding claim, wherein the bearing ring (45) is made of an electrically insulating material.

3. The arrangement according to either one of the preceding claims, wherein the carrier (31) is made of an electrically conductive material.

4. The arrangement according to any one of the preceding claims, wherein the carrier (31) has a plate-shaped region, in which the through-openings (4) are arranged next to one another.

5. The arrangement according to any one of the preceding claims, wherein at least one recess (39) extending in radial direction is arranged on the inner edge of the through-opening (4), wherein the bearing ring (45) has a projection (48) extending outwardly in radial direction, and wherein the projection (48) engages in the recess (39) in such a way that the bearing ring (45) is secured against a rotational movement in the circumferential direction of the edge of the through-opening.

6. The arrangement according to any one of the preceding claims, wherein the arrangement has a second carrier with at least one second through-opening (4) for inserting one of the assemblies (3), and wherein the assembly (3), when installed, extends through one of the through-openings (4) of the first carrier (31) and, in another region located at a distance in the axial direction from the first carrier (31), extends through the second through-opening (4) and is held in the second through-opening (4) by means of a second bearing ring (45).

7. An energy storage device with the arrangement according to any one of the preceding claims, wherein the capacitor assemblies (3) are electrically connected to one another.

8. A method for holding a plurality of electric capacitor assemblies (3), in particular assemblies (3) of which the housing is non-floating, wherein, to install the assemblies (3):
- the assemblies (3) are inserted into one each of the through-openings (4) of a carrier (31) having a plurality of through-openings (4), such that each assembly (3) extends through the corresponding through-opening (4),
- before, during and/or after insertion of the assembly (3) in the corresponding through-opening (4), a bearing ring (45) is inserted into the particular through-opening (4) so that it is arranged between the outer circumference of the assembly (3) and the inner edge of the through-opening (4) and holds the assembly (3) on the carrier (31) as soon as installation has been completed,
so that, as soon as installation has been completed, the assembly (3) makes contact with the inner edge of the through-opening (4) by way of the bearing ring but is not directly in contact with the inner edge of the through-opening (3), wherein the assembly (3) is installed on the carrier (31) using a clamping ring (36) that extends, when the assembly (3) is installed, between the outer circumference of the assembly (3) and the material of the carrier (31) such that the assembly (3), the clamping ring (36) and the bearing ring (45) are held on the inner edge of the through-opening (4) by clamping action, wherein an axial direction is defined by the through-opening (4) and extends from one side of the carrier (31) through the through-opening (4) to an opposite side of the carrier (31), wherein the clamping ring (36), to install the assembly (3), is moved in the axial direction in order to produce the clamping action,
**characterised in that**
the clamping ring (36) is moved in the axial direction by a screwing motion of the bearing ring (45) and/or the clamping ring (36) and by cooperation of a first thread of the clamping ring with a second thread of the bearing ring and is thus brought into an axial position, in which the clamping ring (36) produces the clamping action.

9. The method according to the preceding claim, wherein a material which forms the outer circumference of the assembly (3) is electrically insulated with respect to the material of the carrier (31) by the bearing ring (45).

10. The method according to claim 8 or 9, wherein the bearing ring (45) is arranged in the through-opening (4) in such a way that it extends circumferentially around the outer circumference of the assembly (3) on the inner edge of the through-opening (4).

11. The method according to any one of claims 8 to 10, wherein the assembly (3) is fastened to a carrier (31, 81a, 81b) in each case via a bearing ring (45) in axial regions distanced from one another.

## Revendications

1. Ensemble servant à maintenir une multitude de modules condensateurs (3) électriques, en particulier de modules, dont le boîtier est associé à un potentiel, dans lequel l'ensemble présente ce qui suit :
- un support (31) avec respectivement une ouverture de passage (4) servant à introduire un des modules (3),
- au moins une bague de palier (45) servant à monter un module (3),
dans lequel la bague de palier (45) est adaptée de telle manière aux dimensions de l'ouverture de passage (4) et du module (3) que le module (3) qui s'étend à travers l'ouverture de passage (4) est en contact avec le bord intérieur de l'ouverture de passage (4) par l'intermédiaire de la bague de palier (45), mais n'est pas en contact directement avec le bord intérieur de l'ouverture de passage (4),
dans lequel l'ensemble présente une bague de serrage (36), qui s'étend dans un état monté du module (3) de telle manière entre la périphérie extérieure du module (3) et le matériau du support (31) que le module (3), la bague de serrage (36) et la bague de palier (45) sont maintenus par un effet de serrage au niveau du bord intérieur de l'ouverture de passage (4),
dans lequel est définie par l'ouverture de passage (4) une direction axiale, qui s'étend depuis un côté du support (31) à travers l'ouverture de passage (4) vers un côté opposé du support (31), dans lequel l'ensemble est configuré de telle sorte que la bague de serrage (36) doit être déplacée aux fins du montage du module (3) dans la direction axiale pour produire l'effet de serrage,
**caractérisé en ce que**
la bague de serrage (36) présente un premier filetage (51), et la bague de palier (45) présente un second filetage (50), qui coopèrent l'un avec l'autre de telle manière que la bague de serrage (36) est déplacée dans la direction axiale par un déplacement de vissage de la bague de palier (45) et/ou de la bague de serrage (36) et est ainsi amenée dans une position axiale, dans laquelle la bague de serrage (36) produit l'effet de serrage.

2. Ensemble selon la revendication précédente, dans lequel la bague de palier (45) est constituée d'un matériau électriquement isolant.

3. Ensemble selon l'une quelconque des revendications précédentes, dans lequel le support (31) est constitué d'un matériau électriquement conducteur.

4. Ensemble selon l'une quelconque des revendications précédentes, dans lequel le support (31) présente une zone en forme de plaque, dans laquelle les ouvertures de passage (4) sont disposées côte à côte.

5. Ensemble selon l'une quelconque des revendications précédentes, dans lequel au moins un évidement (39) s'étendant dans la direction axiale est disposé au niveau du bord intérieur de l'ouverture de passage (4), dans lequel la bague de palier (45) présente une saillie (48) s'étendant dans la direction axiale vers l'extérieur et dans lequel la saillie (48) vient en prise de telle manière avec l'évidement (39) qu'un déplacement en rotation de la bague de palier (45) est bloqué dans la direction périphérique du bord de l'ouverture de passage.

6. Ensemble selon l'une quelconque des revendications précédentes, dans lequel l'ensemble présente un second support avec au moins une seconde ouverture de passage (4) servant à introduire un des modules (3) et dans lequel le module (3) s'étend dans l'état monté à travers une des ouvertures de passage (4) du premier support (31) et dans une autre zone, qui se trouve éloignée du premier support (31) dans la direction axiale, à travers la seconde ouverture de passage (4) et est maintenu au moyen d'une seconde bague de palier (45) dans la seconde ouverture de passage (4).

7. Accumulateur d'énergie avec l'ensemble selon l'une quelconque des revendications précédentes, dans lequel les modules condensateurs (3) sont reliés les uns aux autres de manière électrique.

8. Procédé servant à maintenir une multitude de modules condensateurs (3) électriques, en particulier de modules (3), dont le boîtier est associé à un potentiel, dans lequel aux fins du montage des modules (3) :
- respectivement un module (3) est introduit dans une des ouvertures de passage (4) d'un support (31) avec une multitude d'ouvertures de passage (4) de sorte que le module (3) s'étend à travers l'ouverture de passage (4) respective,
- avant, pendant et/ou après l'introduction du module (3) dans l'ouverture de passage (4) respective, une bague de palier (45) est introduite dans l'ouverture de passage (4) respective si bien qu'elle est disposée entre la périphérie extérieure du module (3) et le bord intérieur de l'ouverture de passage (4) et maintient le module (3) au niveau du support (31) dès que le montage est terminé, si bien que le module (3), dès que le montage est terminé, est en contact avec le bord intérieur de l'ouverture de passage (4) par l'intermédiaire de la bague de palier, mais n'est pas en contact directement avec le bord intérieur de l'ouverture de passage (4),
dans lequel le module (3) est monté sur le support (31) en utilisant une bague de serrage (36), qui s'étend dans un état monté du module (3) entre la périphérie extérieure du module (3) et le matériau du support (31) si bien que le module (3), la bague de serrage (36) et la bague de palier (45) sont maintenus par un effet de serrage au niveau du bord intérieur de l'ouverture de passage (4),
dans lequel est définie par l'ouverture de passage (4) une direction axiale, qui s'étend depuis un côté du support (31) à travers l'ouverture de passage (4) vers un côté opposé du support (31), dans lequel la bague de serrage (36) est déplacée aux fins du montage du module (3) dans la direction axiale pour produire l'effet de serrage,
**caractérisé en ce que**
la bague de serrage (36) est déplacée dans la direction axiale par un déplacement de vissage de la bague de palier (45) et/ou de la bague de serrage (36) et par coopération d'un premier filetage de la bague de serrage avec un second filetage de la bague de palier et est ainsi amenée dans une position axiale, dans laquelle la bague de serrage (36) produit l'effet de serrage.

9. Procédé selon la revendication précédente, dans lequel un matériau, qui forme la périphérie extérieure du module (3), est isolé électriquement du matériau du support (31) par la bague de palier (45).

10. Procédé selon la revendication 8 ou 9, dans lequel la bague de palier (45) est disposée de telle manière dans l'ouverture de passage (4) qu'elle s'étend au niveau du bord intérieur de l'ouverture de passage (4) tout autour de la périphérie extérieure du module (3).

11. Procédé selon l'une quelconque des revendications 8 à 10, dans lequel le module (3) est fixé dans des zones axiales espacées les unes des autres respectivement par l'intermédiaire d'une bague de palier (45) au niveau d'un support (31, 81a, 81b).
